# EUROPEAN PATENT APPLICATION

(11) **EP 4 450 854 A1**
(43) Date of publication of application: **23.10.2024**
(21) Application number: 22906253.4
(22) Date of filing: 29.11.2022
(51) Int. Cl.: F16K 15/20, F16K 15/18, F16K 1/04, F16K 1/32, F16K 27/02, F25B 41/20, F25B 41/40

(54) **VALVE ASSEMBLY, STOP VALVE AND REFRIGERATION SYSTEM HAVING SAME**

(30) Priority: 18.12.2021 CN 202111557164; 18.12.2021 CN 202123211284 U
(71) Applicant: Zhejiang Dunan Artificial Environment Co., Ltd., Shaoxing Zhejiang 311835 (CN)
(72) Inventor: ZHOU, Feng, Shaoxing, Zhejiang 311835 (CN); FENG, Guanghua, Shaoxing, Zhejiang 311835 (CN); CHEN, Diyong, Shaoxing, Zhejiang 311835 (CN); SHOU, Jie, Shaoxing, Zhejiang 311835 (CN)
(74) Representative: Petraz, Gilberto Luigi
(86) International application number: PCT/CN2022/135059
(87) International publication number: WO 2023/109503

(57) **Abstract**

A valve assembly (100) is provided. The valve assembly (100) includes a core body (10) and a core stem (20), the core stem (20) is provided in the core body (10), a first valve port (112) is formed by an inner wall of the core body (10), and the core stem (20) is capable of moving along an axis of the core body (10) to open/close the first valve port (112). The core body (10) includes an inflating connector (15), a positioning portion (11), and a core base (12) integrated with each other, the inflating connector (15) is disposed at a side of the positioning portion (11) away from the first valve port (112), and the core base (12) configured to be fixed with an external element is provided at a side of the positioning portion (11) towards the first valve port (112).

## Description

### CROSS-REFERENCE TO RELATED APPLICATIONS

This application claims priority to Chinese patent application Nos. 202111557164.0, filed on December 18, 2021, and titled "VALVE ASSEMBLY, STOP VALVE AND REFRIGERATION SYSTEM THEREOF", and 202123211284.3, filed on December 18, 2021, and titled "VALVE ASSEMBLY AND STOP VALVE HAVING SAME". The contents of the above identified applications are hereby incorporated herein in their entireties by reference.

### TECHNICAL FIELD

The present application relates to a field of cooling technology, and in particular, to a valve assembly, a stop valve and a refrigeration system thereof.

### BACKGROUND

In a refrigeration system, a stop valve plays an important role in cutting off a medium in pipelines where the stop valve is located in. In the stop valve, a valve assembly is used to supplement refrigerant to the refrigeration system.

A traditional valve assembly has some problems of difficult processing, high process cost, and easily leaking.

### SUMMARY

According to various embodiments of the present application, a valve assembly is provided.

A valve assembly includes a core body and a core stem, the core stem is provided in the core body, a first valve port is formed on an inner wall of the core body. The core stem is capable of moving along an axis of the core body to open or close the first valve port. The core body includes an inflating connector, a positioning portion, and a core base integrated with each other. The inflating connector is disposed at a side of the positioning portion away from the first valve port, and the core base is disposed at a side of the positioning portion towards the first valve port and configured to be fixedly connected to an external element.

By such arrangement, the inflating connector, the positioning portion, and the core base are integrated with each other, three elements are not required to be individually processed and assembled, thereby reducing a process cost. Since the three elements are integrated with each other, a structure is simple and stable. Furthermore, it is not required an additional sealing component between the positioning portion and the core base, such that it facilitates a sealing performance of the valve assembly. An end of the positioning portion is not required to penetrate into and be connected to the core base, and due to an integrated structure between the positioning portion and the core base, thicker wall when they are separated and connected with each other is avoided. Thereby, a flow amount of a medium in the core body and a charge amount are both increased.

In one embodiment, the inflating connector, the positioning portion and the core base are all in a hollow structure. The first valve port of the core body is located between the positioning portion and the core base. The core stem includes a first segment and a second segment connected to each other. A part of the first segment of the core stem penetrates through the positioning portion. At least part of the second segment of the core stem is located in the core base.

In one embodiment, a side of the second segment towards the positioning portion is provided with a first conical surface. An inner wall of the first valve port is provided with a second conical surface. The first conical surface is capable of abutting against the second conical surface. An angle between the first conical surface and an axis of the core stem is defined as an angle α. An angle between the second conical surface and an axis of the core stem is defined as an angle β. The angle α between the first conical surface and the axis of the core stem is less than the angle β between the second conical surface and the axis of the core stem.

By such arrangement, when the core stem is located in a closed position in which the valve assembly is in a closed state, the first conical surface and the second conical surface forms a line seal, facilitating a tight seal between the first conical surface and the second conical surface, thereby preventing the medium from leaking.

In one embodiment, an outer peripheral side of the second segment of the core stem is provided with a recess. A first sealing component is embedded into the recess. The first sealing component is capable of abutting against the first valve port to seal the first valve port.

By such arrangement, the first sealing component is embedded into the recess, the recess can restrict the first sealing component in three directions, thereby preventing the first sealing component from detaching from the recess. A connection between the first sealing component and the positioning portion is a soft seal, and a sealing performance between the first sealing component and the positioning portion is excellent, ensuring a great gas sealing performance of the valve assembly.

In one embodiment, a fixing block is provided in the positioning portion and fixed on an inner wall of the positioning portion. The fixing block is provided with a through hole. The core stem penetrates through the through hole and is capable of moving along an axis of the fixing block.

By such arrangement, a movement path of the core stem along an axis thereof can be ensured, and the phenomenon that the core stem deviates during a process of opening or closing the valve assembly can be avoided.

In one embodiment, a limiting protrusion is formed on an end of the first segment of the core stem away from the core base, an elastic component is sleeved on an outer peripheral side of the first segment of the core stem, one end of the elastic component abuts against the fixing block, and the other end of the elastic component abuts against the limiting protrusion.

By such arrangement, the elastic component enables the core stem to suffer from an elastic force of the elastic component towards the limiting protrusion when the core stem does not suffer from an external pressure. By such elastic force, the core stem can be in tight contact with the positioning portion. When the core stem suffers from the external force, the core stem moves toward a direction away from the valve cover. After a flow channel is opened or formed, the elastic component can apply the elastic force to the limiting protrusion, enabling the core stem to back to the valve closing portion.

In one embodiment, a passage is formed between an outer wall of the fixing block and an inner wall of the positioning portion, a gap is formed between the inflating connector, the positioning portion and the core stem, and in a opened state of the first valve port, a flow channel defined by the gap, the passage and the first valve port is capable of enabling a medium to flow.

By such arrangement, a flow channel flow area formed by an inner wall of the core base is relative large, the first valve port and the gap is relatively large, facilitating a charge efficiency of supplying the medium to the refrigeration system by the valve assembly.

In one embodiment, an outer wall of the core base is provided with a limiting step limitedly connected to the external element.

By such arrangement, a connection between the core base and the external element is tighter, facilitating a stability of the connection between the valve assembly and the external element.

In one embodiment, a valve cover is sleeved on an outer peripheral side of the inflating connector, which is configured to seal the valve assembly. The inflating connector includes an external thread, an inner wall of the valve cover includes an internal thread, and the valve cover is threadedly connected to the inflating connector. Alternatively, a second sealing component is disposed between the valve cover and the inflating connector, and the second sealing component is restricted by the inflating connector and the valve cover, which realizes soft seal between the second sealing component and the inflating connector and between the second sealing component and the valve cover.

By such arrangement, except for a seal between the core stem and the core body, the valve cover is configured to seal the valve assembly, thereby ensuring the sealing performance of the valve assembly. The second sealing component is capable of further improving a sealing performance of the valve cover.

A stop valve is provided. The stop valve includes a valve body, a valve core, and the above valve assembly. The valve assembly is connected to the valve body. The valve core is disposed in the valve body and capable of moving along an axis of the valve body to open or close the stop valve.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a cross-section view of a valve assembly of the present application.
FIG. 2 is an exploded view of a valve assembly of the present application.
FIG. 3 is a cross-section view of a stop valve installing with a valve assembly in the present application.
FIG. 4 is cross-section exploded view of the stop valve installing with a valve assembly in the present application.
FIG. 5 is a connection relationship diagram of a positioning portion and a fixing block of the present application.

Reference signs are as follows.

100 represents a valve assembly; 10 represents a core body; 11 represents a positioning portion; 111 represents a second conical surface; 112 represents a first valve port; 12 represents a core base; 121 represents a limiting step; 13 represents a flow channel; 14 represents a fixing block; 141 represents a through hole; 15 represents an inflating connector; 151 represents an external thread; 16 represents a passage; 20 represents a core stem; 21 represent a first segment; 211 represents a limiting protrusion; 212 represents an elastic component; 22 represents a second segment; 221 represents a first conical surface; 222 represents a recess; 223 represents a first sealing component; 30 represent a valve cover; 31 represents a second sealing component; 32 represents an internal thread; 200 represents a stop valve; 40 represents a valve body; 41 represents a first opening; 411 represents a first interconnecting pipe; 42 represents a second opening; 421 represents a second interconnecting pipe; 43 represents an end cover; 44 represents a valve seat; 441 represents a valve seat opening; 442 represents a step; 50 represents a valve core; 51 represents an operation portion; 52 represents a protrusion; 521 represent a groove; and 53 represents a third sealing component.

### DETAILED DESCRIPTION

The following will provide a clear and complete description of the technical solution in the embodiments of this application, in conjunction with the accompanying drawings. Obviously, the described embodiments are only a part of the embodiments of this application, not all of them. Based on the embodiments in this application, all other embodiments obtained by ordinary skill in this field without creative labor fall within the scope of protection of this application.

It should be noted that, when a component is referred to as "connected to" another component, it can be directly on another component or there can be a centered component. When a component is considered "set on" another component, it can be directly set on another component or there may be a centered component present simultaneously. When a component is considered "fixed to" another component, it can be directly fixed to another component or there may be a centered component present simultaneously.

Unless otherwise defined, all technical and scientific terms used in this article have the same meanings as those commonly understood by those skilled in the technical field of this application. The terms used in the specification of this application are only for the purpose of describing specific embodiments and are not intended to limit this application. The term "or/and" used in this article includes any and all combinations of one or more related listed items.

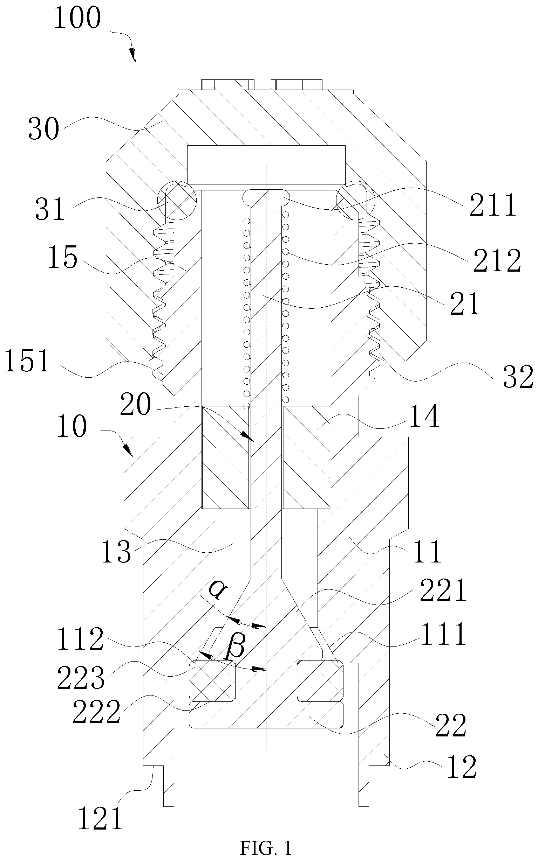

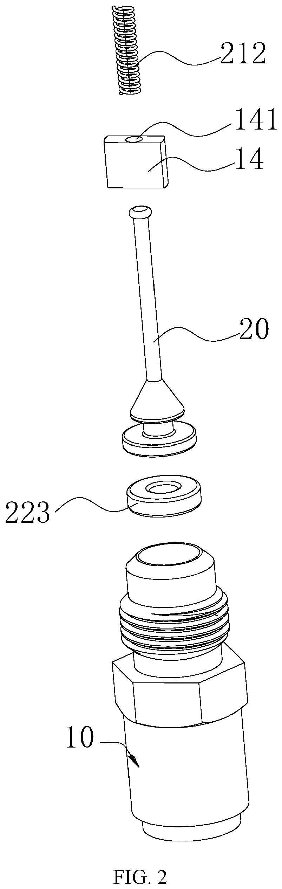

Referring to FIGs. 1 to 2, a valve assembly 100 is provided. The valve assembly 100 is applied to a stop valve 200 and plays a role of supplying a medium, such as refrigerant, for the stop valve 200.

The valve assembly 100 includes a core body 10 and a core stem 20. The core stem 20 is disposed in the core body 10 and can move along an axis of the core body 10 to open or close the valve assembly 100.

The core body 10 is provided with a first valve port 112. The core stem 20 penetrates through the core body 10 and can move along the axis of the core body 10 to open or close the first valve port 112.

The core body 10 includes an inflating connector 15, a positioning portion 11 and the core base 12. The inflating connector 15, the positioning portion 11, and the core base 12 are integrated with each other. The inflating connector 15 is disposed at a side of the positioning portion 11 away from the first valve port 112, and the core base 12 is disposed at a side of the positioning portion 11 towards the first valve port 112 and capable of being fixedly connected to an external element. By such arrangement, three elements are not required to be individually processed and assembled, reducing a process cost. Since the three elements are integrated with each other, a structure are simple and stable. It is not required an additional sealing component between the positioning portion 11 and the core base 12, thereby improving a sealing performance of the valve assembly 100. In addition, an end of the positioning portion 11 is not required to penetrate into and be connected to the core base 12. Thereby, a flow amount of the medium in the core body 10 and a charge amount are increased.

The inflating connector 15, the positioning portion 11 and the core base 12 are all in a hollow structure. There is a gap between an inner wall of the positioning portion 11 and the core stem 20. A flow channel 13 configured for the medium to flow is formed by the inner wall of the core base 12, the first valve port 112 and the gap between the inner wall of the positioning portion 11 and the core stem 20. In this way, a flow area is relatively large, increasing a charge efficiency of supplying the medium to refrigeration system by the valve assembly 100.

The inflating connector 15 is located at a side of the positioning portion 11 away from the core base 12. When the inflating connector 100 is inflated the inflating connector 15 can fit with the external element.

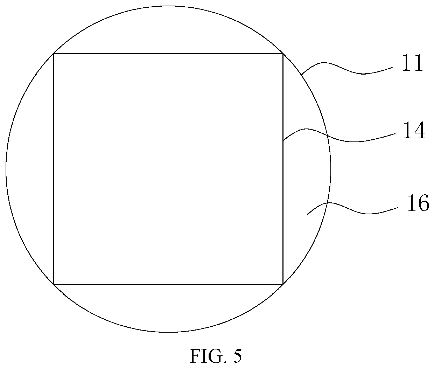

Referring to FIG. 5, a fixing block 14 is provided in the positioning portion 11. The fixing block 14 is fixed on an inner wall of the positioning portion 11 and is configured to limit a movement of the core stem 20 along an axis of the core stem 20.

In some embodiments, a passage 16 is formed between an outer wall of the fixing block 14 and the inner wall of the positioning portion 11, a charge efficiency of supplying the medium to the refrigeration system by the valve assembly 100 can be adjusted.

In particular, the fixing block 14 is provided with a through hole 141. The core stem 20 penetrates through the through hole 141 and can move along an axis of the fixing block 14. Since the fixing block 14 is fixed on the positioning portion 11, a movement path of the core stem 20 along the axis of the core stem 20 can be ensured by such arrangement. The phenomenon that the core stem 20 deviates during that a process of opening or closing the valve assembly 100 can be avoided.

A limiting step 121 is formed on an outer wall of the core base 12 and configured to be limitedly connected to the external element, enabling the core base 12 to be connected to the external element more tightly, thereby improving a stability of a connection between the valve assembly 100 and the external element.

The valve assembly 100 further includes a valve cover 30. The valve cover 30 is sleeved on an outer peripheral side of the core body 10 and is configured to seal the valve assembly 100. In the present application, the valve cover 30 is threadedly connected to the core body 10, an inner wall of the valve assembly 30 is provided with an internal thread 32. An end of the core body 10 towards the valve assembly 30 is provided with an external thread 151. A thread connection between the valve cover 30 and the core body 10 can facilitate a detachment and an installation between the valve assembly 30 and the core body 10. In other embodiments, the valve cover 30 can be snapped with the core body 10, as long as the connection of the valve assembly 30 and the core body 10 is required to realize a detachable connection, and not limited by the above thread connection in the present embodiment.

In order to ensure a sealing performance between the core body 10 and the valve cover 30, a second sealing component 31 is provided between the core body 10 and the valve cover 30. The second sealing is tightly restricted by the core body 10 and the valve cover 30, and softly seals the core body 10 and the valve cover 30.

The core stem 20 includes a first segment 21 and a second segment 22. The first segment 21 of the core stem 20 is located towards the valve cover 30 and is configured to enable the core stem 20 to back to an initial location. The second segment 22 of the core stem 20 is located at an end of the first segment 22 of the core stem 20 away from the valve cover 30. The second segment 22 of the core stem 20 is configured to abut against the core body 10, so as to seal the first valve port 112.

In particular, a limiting protrusion 211 is formed at an end of the first segment 21 of the core stem 20 towards the valve cover 30. An elastic component 212 is sleeved on an outer peripheral of the first segment 21 of the core stem 20. One end of the elastic component 212 towards the valve cover 30 abuts against the limiting protrusion 211, and the other end of the elastic component 212 abuts against the fixing block 14. By such arrangement, the elastic component 212 enables the core stem 20 to suffer from an elastic force of the elastic component 212 towards the limiting protrusion 211 when the core stem 20 does not suffer from an external pressure. aBy such elastic force, the core stem 20 can be always in contact with the fixing block 14. When the core stem 20 suffers from the external force, the core stem 20 moves toward a direction away from the valve cover 30. After a flow channel 13 is opened, the elastic component 212 can apply the elastic force to the limiting protrusion 211, so as to enable the core stem 20 to back to a position in which the valve assembly is in a closed state. The elastic component 212 can be an elastic element with elasticity such as an elastic component, a corrugated pipe and so on.

A first conical surface 221 is formed on a side of the second segment 22 of the core bar 20 towards the positioning portion 11. A second conical surface 111 is formed on an inner wall of the first valve port 112. When the valve assembly 100 is in a closed state, the first conical surface 221 abuts against the second conical surface 111, and the first conical surface 221 and the second conical surface 11 can realize a hard seal to seal the first valve port 112.

Furthermore, an angle α between the first conical surface 221 and the axis of the core stem 20 is less than an angle β between the second conical surface 111 and the axis of the core stem 20. By such arrangement, when the core stem 20 is located in a position in which the valve assembly is in the closed state, a line seal is formed by the first conical surface 221 and the second conical surface 111, facilitating a tight seal between the first conical surface 221 and the second conical surface 111, thereby preventing the medium from leaking.

An outer peripheral side of the second segment 22 of the core stem 20 is provided with a recess 222. A first sealing component 223 is embedded into the recess 222. When the second segment 22 of the core stem 20 abuts against the positioning portion 11, a soft seal can be formed by the first sealing component 223 and the second conical surface 111 to seal the first sealing component 112. The soft seal between the first sealing component 223 and the second conical surface 111 is cooperated with the hard seal between the first conical surface 221 and the second conical surface 111 to form a double seal, thereby ensuring a sealing performance of the valve assembly 100.

In addition, in the present embodiment, the valve assembly 100 is made of a material of stainless steel. Since the stainless steel is relatively hard, the positioning portion 11 and the core base 12 are separated in the present application, it is not required an additional thread to realize a connection between the positioning portion 11 and the core base 12, thereby reducing a process difficulty. In other embodiments, the valve assembly 100 can be made of brass or red copper materials, as long as the materials of the valve assembly 100 can realize such function of the valve assembly 100, and not limited by the stainless steel material in the present embodiment.

During an operation of the valve assembly 100, when the medium is required to be supplied to the refrigeration system, the valve assembly 30 is unscrewed, an end of the core stem 20 away from the valve cover 30 is compressed, such that the core stem 20 moves towards away from the valve cover 30. The first conical surface 221 and the first sealing component 223 are both detached from the positioning portion 11, the flow channel 13 is opened, the medium is charged to the refrigeration system by the flow channel 13. When the charge is completed, as long as a force compressing the core stem 20 is withdrawn, the elastic component abuts against the limiting protrusion 211 and pushes the core stem 20 back to the valve closing portion, the first conical surface 221 and the first sealing component 223 are in contact with the positioning portion 11 again, thereby enabling the valve assembly 100 to be closed.

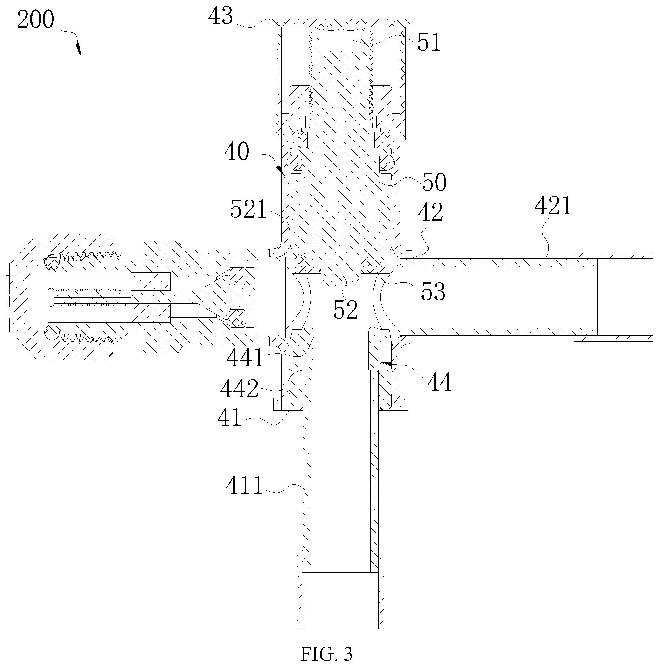

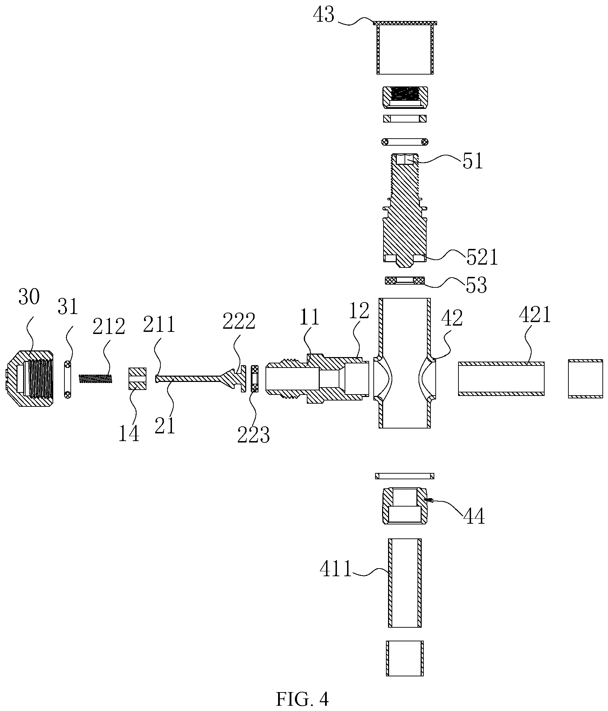

Referring to FIGs. 3 to 4, a stop valve 200 is further provided in the present application. The stop valve 200 is installed in the refrigeration system. The stop valve is configured to enable a medium in pipelines to flow or cut off a flow of the medium. The stop valve 200 includes the valve assembly 100, in which the valve assembly 100 is configured to supply the medium to the refrigeration system.

The stop valve 200 further includes a stop valve 40 and a valve core 50. The valve core 50 is connected to the valve body 40. The valve body 40 is in a hollow structure, which is configured to accommodate components such as the valve core 50 and so on. At least part of the valve core 50 is disposed in the valve body 40. The valve core 50 is capable of moving along an axis of the valve body 40.

The valve body 40 is provided with a first opening 41 and a second opening 42. In the present embodiment, the first opening 41 is located down the valve body 40, and the second opening 42 is located on a right side of the valve body 40. In other embodiments, the first opening 41 and the second opening 42 can be located on other portions of the valve body 40, as long as the medium can flow, and not limited by positions of the present embodiment.

A first interconnecting pipe 411 is connected to a side of the first opening 41 away from the valve body 40. The first opening 41 is in communication with external environment through the first interconnecting pipe 411. A second interconnecting pipe 421 is connected to a side of the second opening 42 away from the valve body 40. The second opening 42 is in communication with the external environment through the second interconnecting pipe 421.

In the present embodiments, the first interconnecting pipe 411 and the second interconnecting pipe 421 are made of stainless steel, thereby reducing a cost. In other embodiment, the first interconnecting pipe 411 and the second interconnecting pipe 421 can be made of red copper and so on.

The valve body 40 further includes an end cover 43 and a valve seat 44. The end cover is located on top of the valve body 40 and capable of being cooperated with the valve core 50 to seal the valve body 40, so as to prevent external impurities such ash, powder, and so on from entering into the valve body 40, prevent from influencing a sealing performance of the stop valve 200 and purity of the medium entering to the valve body 40, and prevent from influencing other relative function of the stop valve 200. The valve seat 44 is located in the first opening 41 and configured to abut against the valve core 50, to realize a communication of an inner part of the valve body 40 or cut off the communication thereof.

In some embodiments, an end cover 43 can be located in a valve body 40, i.e., an outer peripheral side of the end cover 43 abuts against an inner peripheral side of the valve body 40, and an inner peripheral side of the end cover 43 abuts against an outer peripheral side of the valve core 50. By such arrangement, a cooperation between the end cover 43 and the valve core 50 can play a same role to seal the valve body 40. A position of the end cover 43 is not limited by a solution in the present embodiment, as long as it can realize the above function.

The valve seat 44 is provided with a valve seat opening 441, and the valve seat opening 441 is in communication with the first opening 41 and the second opening 42, which forms a flow channel 13 together for the medium to flow in or out. In the present embodiment, the valve seat 44 is separated with the valve body 40 to reduce a process difficulty. In some embodiments, the valve seat 44 can be directly formed by the valve body 40.

A part of the first interconnecting pipe 411 penetrates into the valve seat 44, and an outer wall of the first interconnecting pipe 411 is fixed on an inner wall of the valve seat 44 by braze, thereby enhancing firmness of braze.

An inner size of an end of the valve seat 44 towards the valve core 50 is less than an inner size of an end of the valve seat 44 away from the valve core 50, so as to form a step 442. An end of the first interconnecting pipe 411 abuts against the step 442. By the first interconnecting pipe 411 being restricted by the valve seat 44, a restricting strength is high, and it is not required to add a structure being connected to the first interconnecting pipe 411, thereby reducing a cost.

In addition, the valve body 40 is made of stainless steel, thereby reducing a cost.

An operation portion 51 is disposed on the valve core 50. The operation portion 51 is defined as a hollow structure with a top opening. A plurality of planes are evenly distributed around an inner surface of the operation portion 51 at intervals, so as to allow a tool such as hex wrench and so on to operate. In other embodiments, the plurality of planes are not evenly distributed around an inner surface of the operation portion 51, so as to allow a wrench with an irregular shape to operate.

The valve core 50 is driven by the operation portion 51 and rotates synchronously with the operation portion 51. During work, the operation portion 51 is driven to rotate by an external machine or tool and undergoes an axial lifting motion through threaded fit between the operation portion 51 and the valve body 40, thereby driving the valve core 50 to realize a movement of the valve core 50 along an axis of the valve core 50.

A protrusion 52 and a groove 521 are formed on an end of the valve core 50. The protrusion 52 is in a cylinder shape. One end of the protrusion 52 is connected to the valve core 50, and the other end of the protrusion extends towards the valve seat opening 441, which is configured to guide the valve core 50 to penetrate into the valve seat opening 441. The groove 521 is a ring-shaped groove 521. The groove 521 encircles the protrusion 52, and an opening of the groove 521 is formed towards the valve seat 44.

A third sealing component 53 is provided in the groove 521. The third sealing component 53 is in a ring shape. The third sealing component 53 is embedded into and in interference fit with the groove 521. In a closed state of the stop valve 200, the third sealing component 53 can abut against the valve seat 44 and seal the valve seat opening 441.

When the stop valve 200 is closed, the valve core 50 moves towards the valve seat opening 441, and the third sealing component 53 abuts against the valve seat 44, which is configured to separate the first opening 41 and the first interconnecting pipe 411 from the inner part of the valve core 40. In some embodiments, the third sealing component 53 is made of red copper to ensure a sealing performance between the third sealing component 53 and the valve seat opening 441. In other embodiments, the third sealing component 53 can be made of a material which can ensure the sealing performance such as hard plastic and so on.

A refrigeration system is further provided in the present application. The refrigeration system includes the stop valve 200. The stop valve 200 is installed in a medium path of the refrigeration system, which is configured to control a cut off and flow of the medium in the medium path and supply the medium to the refrigeration system.

During work of the stop valve 200 in the present embodiment, when the stop valve 200 is required to close, an operation portion 51 on a top of the stop valve 200 is screwed, the operation portion 51 rotates synchronously with the valve core 50 and drives the valve core 50 to move along the axis of the valve core 50 by a thread fit between the operation portion 51 and the valve core 40, such that the protrusion 52 on a bottom of the valve core 50 is inserted into the valve seat opening 441 and the third sealing component 53 abuts against the valve seat 44 to seal the first interconnecting pipe 441, thereby cutting off a communication between the second interconnecting pipe 421 and the first interconnecting pipe 411.

In the present application, the inflating connector 15, the positioning portion 11 and the core base 12 are integrated with each other, therefore, three elements thereof are not required to be individually processed and assembled, thereby reducing a cost. In addition, since the core body 10 is integrated, a structure is simple and stable. It is not required an additional sealing component between the positioning portion 11 and the core base 12, thereby improving the sealing performance of the valve assembly 100. An end of the positioning portion 11 is not required to penetrate into and be connected to the core base 12, thereby increasing a flow amount of the medium in the core body 10 and a charge amount.

The various technical features of the above embodiments can be combined in any way. To make the description concise, all possible combinations of the various technical features in the above embodiments have not been described. However, as long as there is no contradiction in the combination of these technical features, they should be considered within the scope of this specification.

The above embodiments only express several embodiments of the present application, and their description is more specific and detailed, but cannot be understood as a limitation on the scope of the invention patent. It should be pointed out that for ordinary technical personnel in this field, several modifications and improvements can be made without departing from the concept of this application, all of which fall within the scope of protection of this application Therefore, the scope of protection of this patent application shall be based on the attached claims.

## Claims

1. A valve assembly, **characterized by** comprising a core body and a core stem, wherein the core stem is provided in the core body, a first valve port is formed on an inner wall of the core body, the core stem is capable of moving along an axis of the core body to open or close the first valve port; and
the core body comprises an inflating connector, a positioning portion, and a core base integrated with each other, the inflating connector is disposed at a side of the positioning portion away from the first valve port, and the core base is provided at a side of the positioning portion towards the first valve port and configured to be fixedly connected to an external element.

2. The valve assembly of claim 1, wherein the inflating connector, the positioning portion and the core base are all in a hollow structure, the first valve port of the core body is located between the positioning portion and the core base; and
the core stem comprises a first segment and a second segment connected to each other, at least part of the first segment of the core stem penetrates through the positioning portion, and at least part of the second segment of the core stem is located in the core base.

3. The valve assembly of claim 2, wherein a side of the second segment towards the positioning portion is provided with a first conical surface, an inner wall of the first valve port is provided with a second conical surface, the first conical surface is capable of abutting against the second conical surface, an angle between the first conical surface and an axis of the core stem is defined as an angle α, an angle between the second conical surface and an axis of the core stem is defined as an angle β, and the angle α between the first conical surface and the axis of the core stem is less than the angle β between the second conical surface and the axis of the core stem.

4. The valve assembly of claim 2, wherein an outer peripheral side of the second segment of the core stem is provided with a recess, a first sealing component is embedded into the recess, and
the first sealing component is capable of abutting against the first valve port to seal the first valve port.

5. The valve assembly of claim 2, wherein a fixing block is provided in the positioning portion and fixed on an inner wall of the positioning portion, the fixing block is provided with a through hole, and the core stem penetrates through the through hole and is capable of moving along an axis of the fixing block.

6. The valve assembly of claim 5, wherein a limiting protrusion is formed on an end of the first segment of the core stem away from the core base, an elastic component is sleeved on an outer peripheral side of the first segment of the core stem, one end of the elastic component abuts against the fixing block, and the other end of the elastic component abuts against the limiting protrusion.

7. The valve assembly of claim 5, wherein a passage is formed between an outer wall of the fixing block and an inner wall of the positioning portion, a gap is formed among the inflating connector, the positioning portion and the core stem, and in an opened state of the first valve port, a flow channel defined by the gap, the passage and the first valve port is capable of enabling a medium to flow.

8. The valve assembly of claim 2, wherein an outer wall of the core base is provided with a limiting step limitedly connected to the external element.

9. The valve assembly of claim 1, wherein a valve cover is sleeved on an outer peripheral side of the inflating connector and configured to seal the valve assembly, the inflating connector comprises an external thread, an inner wall of the valve cover comprises an inner thread fitting with the external thread of the inflating connector, and the valve cover is threadedly connected to the inflating connector.

10. The valve assembly of claim 1, wherein a valve cover is sleeved on an outer peripheral side of the inflating connector and configured to seal the valve assembly, a second sealing component is disposed between the valve cover and the inflating connector, and the second sealing component is restricted by the inflating connector and the valve cover, which realizes soft seal between the second sealing component and the inflating connector and between the second sealing component and the valve cover.

11. A stop valve, **characterized by** comprising a valve body, a valve core, and a valve assembly, wherein the valve assembly is connected to the valve body, the valve core is disposed in the valve body, the valve core is capable of moving along an axis of the valve body to open or close the stop valve,
the valve assembly comprises a core body and a core stem, the core stem is provided in the core body, a first valve port is formed in an inner wall of the core body, the core stem is capable of moving along an axis of the core body to open or close the first valve port; and the core body comprises an inflating connector, a positioning portion, and a core base integrated with each other, the inflating connector is disposed at a side of the positioning portion away from the first valve port, and the core base is disposed at a side of the positioning portion towards the first valve port and configured to be fixedly connected to an external element.
